# EUROPEAN PATENT SPECIFICATION

(11) **EP 2 816 646 B1**
(45) Date of publication and mention of the grant of the patent: **08.04.2020**
(21) Application number: 13748958.9
(22) Date of filing: 13.02.2013
(51) Int. Cl.: H01M 4/96, B01J 23/42, B01J 37/08, C08B 15/04, D01F 9/16, H01M 4/88, C08L 1/04, D06M 11/83, C08K 3/08, D06M 101/06, H01M 8/1018

(54) **CARBON FIBER COMPOSITE, PROCESS FOR PRODUCING SAME, CATALYST-CARRYING BODY AND POLYMER ELECTROLYTE FUEL CELL**
KOHLENSTOFFFASERVERBUNDSTOFF, VERFAHREN ZUR HERSTELLUNG DAVON, KATALYSATORTRAGENDER KÖRPER UND POLYMERELEKTROLYTBRENNSTOFFZELLE
COMPOSITE DE FIBRES DE CARBONE, SON PROCÉDÉ DE FABRICATION, CORPS DE SUPPORT DE CATALYSEUR ET PILE À COMBUSTIBLE À ÉLECTROLYTE POLYMÈRE

(30) Priority: 15.02.2012 JP 2012030481
(43) Date of publication of application: 24.12.2014
(73) Proprietor: Toppan Printing Co., Ltd., Tokyo 110-8560 (JP)
(72) Inventor: KIMURA, Mitsuharu, Tokyo 110-8560 (JP); OOMORI, Yumiko, Tokyo 110-8560 (JP); ISOGAI, Takuya, Tokyo 110-8560 (JP)
(74) Representative: TBK
(86) International application number: PCT/JP2013/000784
(87) International publication number: WO 2013/121781

(56) References cited:
- EP-A1- 2 327 476
- WO-A1-2004/063438
- WO-A1-2010/095574
- CA-A1- 1 173 816
- JP-A- S5 033 187
- JP-A- S5 079 494
- JP-A- S5 213 490
- JP-A- 2004 253 224
- JP-A- 2008 001 728
- JP-A- 2009 298 972
- JP-A- 2010 269 284
- US-A1- 2008 305 377

## Description

### [Technical Field]

The invention relates to a carbon fiber composite, a method for producing the same, a catalyst support and a polymer electrolyte fuel cell.

### [Background Art]

There is cellulose as a noteworthy eco-friendly material. Cellulose is contained in cell walls of plants, exocrine secretions from microbes, mantles of sea squirts, etc., and is the most common polysaccharide on earth. Cellulose has biodegradability, high crystallinity and excellent stability and safety. Therefore, the development of application to various fields has been expected.

Oxidized cellulose fibril is obtained by preforming an oxidation reaction with 2,2,6,6-tetramethylpiperidine-1-oxyl (TEMPO) -based catalyst. In the oxidized cellulose fibril, only the primary hydroxyl group at the C6 position of three hydroxyl groups, which cellulose on a crystalline surface has, can be selectively converted to a carboxyl group through an aldehyde group. Additionally, the reaction is feasible under mild conditions such as of an aqueous system or at room temperature, for which much attention has been paid to cellulose recently.

It is known that the obtained oxidized cellulose fibril can be dispersed in water as fine cellulose only by suspending in water and adding a slight mechanical treatment. Fine cellulose has high strength due to its high crystallinity and low linear expansion coefficient, and has carboxyl groups on the surface thereof in high density. Therefore, the application to various fields has been expected.

On the other hand, recently, attention has been paid to a fuel cell as the next-generation of clean energy systems. The fuel cell is an electrical power generation system in which reacting hydrogen and oxygen at a pair of electrodes including catalyst layers generates electricity along with heat, the reaction being a reverse reaction of electrolysis of water. The electrical power generation system is characterized in that efficiency is high compared with a conventional power generation method, that the environment load is also low because of no emission of greenhouse effect gas etc. such as carbon dioxide, further that no noise occurs, and so on. There are some varieties depending on types of used ion conductors, and a cell using an ion-conducting polymer membrane is called a polymer electrolyte fuel cell.

For an electrode catalyst of a polymer electrolyte fuel cell, carbon particles supporting very fine platinum particles etc. thereon have been used. If the size of the platinum fine particles becomes too large because of aggregation etc., the cell made from the electrode catalyst cannot show enough performance. In addition, platinum is estimated at about 80000 t in total worldwide reserve amount, and at about 3000 yen/g in price, therefore is a rare noble metal. Accordingly, a technique for preparing platinum fine particles and supporting them efficiently on a carbon substrate becomes important.

In order to improve this, for example, in Patent literature 1, an oxidant is added to platinum complex compound aqueous solution, which is obtained by dissolving sodium hydrogen sulfite in chloroplatinic acid aqueous solution, to generate colloidal particles as oxidation products, followed by regulating pH with a hydrogen peroxide aqueous solution to deposit on conductive carbon, thereby preparing carbon supporting catalyst. According to this method, however, platinum fine particles are deposited randomly on carbon, therefore because of poor dispersibility platinum does not function efficiently as a catalyst. In Patent literature 2, an insulating resin cover layer such as of acetylcellulose or ethylcellulose is formed on a surface of an aggregate containing carbon particles supporting catalysts and an ion-conducting electrolyte, thereby preventing aggregation or dissolution of catalysts. In this method, however, since catalysts are covered with the insulating resin, catalytic function is deteriorated, therefore platinum still cannot be utilized efficiently.

### [Citation List]

### [Patent Literature]

[PTL1] Japanese Patent No. 3368179
[PTL2] Japanese Patent Application Publication No. 2010-238513

Further, EP 2327476 A1 discloses catalysts having metal non-particle catalyst supported on carbonized cellulose fibers. US 2008/0305377 A1 discloses a method for making a metal nanofiber. WO 2010/095574 A1 discloses a complex comprising cellulose nanofibers and metal nanoparticles. CA 1173816 A1 discloses a catalyst comprising activated carbon fibers.

### [Summary of Invention]

### [Technical Problem]

The prior catalyst support has a problem where, even if carbon particles are made to support platinum fine particles thereon, aggregation etc. prevents uniform dispersion with fine size kept, therefore catalytic function cannot be provided efficiently.

The invention has been made in view of those circumstances and has as its object the provision of a material able to support metal fine particles densely, a method for producing the same, a catalyst support and a polymer electrolyte fuel cell.

### Solution to Problem

A first embodiment of the invention is a carbon fiber composite as defined in claim 2.

A second embodiment of the invention is the carbon fiber composite defined in the above first embodiment, characterized in that carboxyl groups are introduced on crystalline surfaces of the fine cellulose by oxidation reaction with an N-oxyl compound wherein an amount of the carboxyl groups of the fine cellulose is from not less than 0.1 mmol/g to not more than 3.0 mmol/g.

A third embodiment of the invention is the carbon fiber composite defined in any one of the above first to third embodiments, characterized in that fine cellulose has crystallinity of 50 % or more, and has a crystal structure of cellulose type I.

A fourth embodiment of the invention is a method for producing a carbon fiber composite as defined in claim 1.

A fifth embodiment of the invention is a catalyst support characterized by using the carbon fiber composite defined in any one of the above first to third embodiments.

A sixth embodiment of the invention is a polymer electrolyte fuel cell characterized by using the catalyst support defined in the above fifth embodiment.

### [Advantageous Effects of Invention]

A carbon fiber composite of the invention can be used as a material able to support metal fine particles.

Further, according to a producing method of the invention, metal fine particles can be reduced to deposit selectively on carboxyl groups of fine cellulose without a step, such as for mixing conductive carbon and metal fine particles separately, or for surface-modifying metal fine particles with an insulating substance. This prevents aggregation of metal fine particles due to sintering etc., which enables metal fine particles to be supported densely on carbon fibers.

In addition, because metal fine particles can be supported on carbon fibers with good dispersibility, reducing the amount of metal fine particles without decrease in catalyst efficiency becomes possible, this enables cost to decrease.

A carbon fiber composite of the invention has the above characteristics, therefore is useful to a catalyst support and a polymer electrolyte fuel cell using the same.

### [Description of Embodiments]

The invention is now described further in detail, giving an embodiment using fine cellulose as carbon fibers.

### (Fine cellulose having a carboxyl group on a crystalline surface thereof and the producing method therefor)

Fine cellulose of the invention has a carboxyl group on a crystalline surface thereof, and the amount of carboxyl groups is preferably from not less than 0.1 mmol/g to not larger than 3.0 mmol/g. From not less than 0.5 mmol/g to not larger than 2.0 mmol/g is more preferable. If the amount of the carboxyl groups is less than 0.1 mmol/g, there is concern that no electrostatic repulsion occurs and thus, a difficulty is involved in uniformly dispersing the fine cellulose. Over 3.0 mmol/g, there is also concern that the crystallinity of fine cellulose lowers.

The fine cellulose of the invention has a number average fiber width ranging from not less than 1 nm to not more than 50 nm and an average fiber length ranging from 100 to 10000 times the number average fiber width. If the number average fiber width is less than 1 nm, the cellulose does not form nanofibers. If it is over 50 nm, there is concern that the carbon fiber composite does not show sufficient catalytic function. If the number average fiber length is less than 100 times the number average fiber width, there is concern that, when metal fine particles are deposited on fine cellulose, fine cellulose may be precipitated by metal fine particles depositing thereon, because of low viscosity. Conversely, over 10000 times the number average fiber width, the viscosity of the dispersion becomes too high, with concern that a problem arises in dispersability.

Fine cellulose has crystallinity of 50 % or more, and preferably has a crystalline structure of type I. Having crystallinity of 50 % or more is preferred, because a fine structure can be formed with the crystalline structure inside. Having the crystalline structure of type I is preferred, because celluloses having high crystallinity derived from natural products can be used.

A method for producing fine cellulose having a carboxyl group on the crystalline surface, according to the invention, is described.

Fine cellulose having carboxyl group on the crystalline surface used in the invention is obtained by the steps of oxidizing cellulose, and reducing the cellulose into fine pieces to obtain a dispersion.

### (Cellulose oxidizing step)

As a starting material of cellulose to be oxidized, there can be used wood pulp, non-wood pulp, recycled waste pulp, cotton, bacterial cellulose, valonia cellulose, ascidian cellulose, microcrystal cellulose, etc.

For the oxidation of cellulose, it is preferred to use a technique wherein a co-oxidant is used in the presence of an N-oxyl compound which has high selectivity to the conversion of primary hydroxyl groups to carboxyl groups while keeping the structure to the possible extent under aqueous, relatively mild conditions. As the N-oxyl compound, mention is made, aside from 2, 2, 6, 6 - tetramethylpiperidine - N - oxyl (TEMPO), 2, 2, 6, 6 - tetramethyl - 4 - hydroxypiperidine - 1 - oxyl, 2, 2, 6, 6 - tetramethyl - 4 - phenoxypiperidine - 1 - oxyl, 2, 2, 6, 6 - tetramethyl - 4 - benzylpiperidine - 1 - oxyl, 2, 2, 6, 6 - tetramethyl - 4 - acryloyloxypiperidine - 1 - oxyl, 2, 2, 6, 6 - tetramethyl - 4 - methacryloyloxypiperidine - 1 - oxyl, 2, 2, 6, 6 - tetramethyl - 4 - benzoyloxypiperidine - 1 - oxyl, 2, 2, 6, 6 - tetramethyl - 4 - cinnamoyloxypiperidine - 1 - oxyl, 2, 2, 6, 6 - tetramethyl - 4 - acetylaminopiperidine - 1 - oxyl, 2, 2, 6, 6 - tetramethyl - 4 - acryloylaminopiperidine - 1 - oxyl, 2, 2, 6, 6 - tetramethyl - 4 - methacryloylaminopiperidine - 1 - oxyl, 2, 2, 6, 6 - tetramethyl - 4 - benzoylaminopiperidine - 1 - oxyl, 2, 2, 6, 6 - tetramethyl - 4 - cinnamoylaminopiperidine - 1 - oxyl, 4 - propionyloxy - 2, 2, 6, 6 - tetramethylpiperidine - N - oxyl, 4 - methoxy - 2, 2, 6, 6 - tetramethylpiperidine - N - oxyl, 4 - ethoxy - 2, 2, 6, 6 - tetramethylpiperidine - N - oxyl, 4 - acetamido - 2, 2, 6, 6 - tetramethylpiperidine - N - oxyl, 4 - oxo - 2, 2, 6, 6 - tetramethylpiperidine - N - oxyl, 2, 2, 4, 4 - tetramethylazetidine - 1 - oxyl, 2, 2, - dimethyl - 4, 4 -dipropylazetidine - 1 - oxyl, 2, 2, 5, 5 - tetramethylpyrrolidine - N - oxyl, 2, 2, 5, 5 - tetramethyl - 3 - oxopyrrolidine - 1 - oxyl, 2, 2, 6, 6 - tetramethyl - 4 - acetoxypiperidine - 1 - oxyl, di tert - butylamine - N - oxyl, and poly [(6 - [1, 1, 3, 3 - tetramethylbutyl] amino) - s - triazine - 2, 4 - diyl] [(2, 2, 6, 6 - tetramethyl - 4 - piperidyl) imino] hexamethylene [(2, 2, 6, 6 - tetramethyl - 4 - piperidyl) imino can be listed. Of these, 2, 2, 6, 6 - tetramethyl - 1 - piperidine - N - oxyl and the like are preferably used.

As the above-mentioned co-oxidant, any co-oxidants such as halogen, hypohalous acid, halous acid, perhalous acid, salts thereof, halogen oxides, nitrogen oxides and peroxides may be used so far as they are able to promote the oxidation reaction. Of these, sodium hypochlorite is preferred in view of the ease in availability and reactivity.

When carried out in co-existence with a bromide or iodide, the oxidation reaction can be advanced smoothly. Thus, the introduction efficiency of carboxyl groups can be improved.

As an N-oxyl compound, TEMPO is preferred and its amount may be enough to function as a catalyst. As a bromide, sodium bromide or lithium bromide is preferred, of which sodium bromide is more preferred in view of cost and stability. Regarding the amount of the co-oxidant, bromide or iodide, it is sufficient if the amount is capable of promoting the oxidation reaction. It is preferred that the reaction is performed under conditions of a pH of 9 - 11. As the oxidation proceeds, carboxyl groups are formed to lower the pH in the system, for which it is necessary to keep the system at a pH of 9 - 11.

To keep the system alkaline, adjustment can be made such that an alkali aqueous solution is added while keeping the pH constant. For the alkali aqueous solution, there is used sodium hydroxide, lithium hydroxide, potassium hydroxide or ammonia aqueous solution, or an organic alkali such as tetramethylammonium hydroxide, tetraethylammonium hydroxide, tetrabutylammonium hydroxide or benzyltrimethylammonium hydroxide. Sodium hydroxide is preferred in view of cost, etc.

In order to terminate the oxidation reaction, it is necessary that the reaction of the co-oxidant is fully finished by addition of another type of alcohol while keeping the pH of the system. As an alcohol to be added, low-molecular-weight alcohols such as methanol, ethanol and propanol are preferred in order to complete the reaction immediately. Ethanol is more preferable in view of the safety of by-products formed by the reaction, etc.

As a method of washing the cellulose (oxidized cellulose) after completion of the oxidation, mention is made of a method of washing while leaving a salt formed with an alkali as it is, a method of washing after addition of an acid for conversion into carboxylated form, a method of washing after addition of an organic solvent for insolubilization. It is preferred from the standpoint of handleability, yield and the like to use the method of washing after addition of an acid for conversion into carboxylated form. As a washing solvent, water is preferred.

### (The step of downsizing cellulose to make a dispersion)

For a method of downsizing oxidized cellulose, the oxidized cellulose is initially suspended in water, various types of organic solvents such as an alcohol, or mixed solvents thereof. If needed, the dispersion may be adjusted in pH so as to enhance dispersability. For an alkali aqueous solution used for the pH adjustment, mention is made of sodium hydroxide, lithium hydroxide, potassium hydroxide, an ammonia aqueous solution, and organic alkalis such as tetramethylammonium hydroxide, tetraethylammonium hydroxide, tetrabuthylammonium hydroxide and benzyltrimethylammonium hydroxide. Of these, sodium hydroxide is preferred in view of cost and the ease in availability, etc.

Subsequently, for physical defibration, the size reduction can be performed by those methods using a high-pressure homogenizer, a ultrahigh-pressure homogenizer, a ball mill, a roll mill, a cutter mill, a planetary mill, a jet mill, an attritor, a grinder, a juicer-mixer, a homomixer, a ultrasonic homogenizer, a nanogenizer, an aqueous counter collision, etc. By performing the defibration process over an arbitrary time or by an arbitrary number of repetitions, an aqueous dispersion of fine cellulose (oxidized fine cellulose) having a carboxyl group on its surfaces can be obtained.

The aqueous dispersion of oxidized fine cellulose may, as necessary, contain components other than cellulose and the component used for the pH adjustment within ranges not impairing the effect of the invention. Other types of components are not limited specifically and can be appropriately selected from known additives depending on the usage of fine cellulose and the like. Specifically, mention is made of organometallic compounds such as alkoxysilanes or hydrolysates thereof, inorganic layered compounds, inorganic acicular minerals, leveling agents, antifoaming agents, water-soluble polymers, synthetic polymers, inorganic particles, organic particles, lubricants, antistats, ultraviolet absorbers, dyes, pigments, stabilizers, magnetic powders, orientation accelerators, plasticizers, and cross-linkers, etc.

### (The step of making oxidized fine cellulose surfaces to support metal fine particles consisting of metals or compounds thereof)

As metal fine particles to be supported on the oxidized fine cellulose surface, although there is no specific limitation, metal fine particles having catalytic function are preferred, and there may be, for example, platinum group elements such as platinum, palladium ruthenium, iridium, rhodium and osmium, metals such as gold, silver, iron, lead, copper, chrome, cobalt, nickel, manganese, vanadium, molybdenum, gallium and aluminum, alloys, oxides or multiple oxides thereof. As methods for making the oxidized fine cellulose surface to support metal fine particles, there is no specific limitation, a method in which a solution of the metal, alloy, oxide, multiple oxide and the like and the aqueous dispersion of oxidized fine cellulose are mixed, thereby interfacing anionic carboxyl groups on the oxidized fine cellulose surface and cations of metal, alloy, oxide, multiple oxide and the like electrostatically to reduce and deposit is preferred for making the oxidized fine cellulose surface to support the metal fine particles densely. As methods for reducing the metal, alloy, oxide or multiple oxide, although there is no specific limitation, methods using weak reductants, which are simple and easy to use to control particle size to be small and equal, are preferred. As reductants, there may be metallic hydrides, such as sodium borohydride, potassium borohydride, lithium aluminium hydride, sodium cyanoborohydride, lithium trialkoxyaluminiumhydride and diisobutylaluminiumhydride, and sodium borohydride is preferred in view of safety and general versatility.

### (The step of carbonizing oxidized fine cellulose-metal fine particle composite, thereby preparing a carbon fiber composite)

Although methods for carbonizing an oxidized fine cellulose-metal fine particle composite is not limited specifically, the temperature for the carbonization only has to be a temperature where oxidized fine cellulose is partially or fully carbonized, from not less than 300 °C to not larger than 3000 °C is preferred, from not less than 600 °C to not larger than 2000 °C is further preferred. In partial carbonization, carboxyl groups on the oxidized fine cellulose particle surface remain, which allows metal fine particles to regioselectively arrange easily, thereby being able to reduce an effect of sintering. Therefore, the partial carbonization is effective. The carbon fiber composites made by carbonizing the oxidized fine cellulose-metal fine particle composites may be crushed to reduce size thereof, as needed.

### (Preparing a polymer electrolyte fuel cell)

In the step of preparing the polymer electrolyte fuel cell, at first, the carbon fiber composite, an ion-exchange resin having proton conductivity and a solvent are mixed, thereby preparing a coating solution for a catalyst layer. As the ion-exchange resin, there may be used a film made of especially perfluoro-based sulfonic acid polymer, such as, by product names, Nafion (trade mark of Du Pont), Flemion (trade mark of Asahi Glass Co., LTD.), Aciplex (trade mark of Asahi Kasei Corporation) and the like. Further, there may be also used a hydrocarbon-based electrolyte, such as sulfonated PEEK (polyetheretherketone), PES (polyethersulfone) and PI (polyimide). As the solvent, although there is no specific limitation, there are used alcohols, such as methanol, ethanol, 1-propanol, 2-propanol, 1-buthanol, 2-buthanol, isobutylalcohol, tert-butylalcohol and pentanol, ketone based solvents, such as acetone, methylethylketone, pentanone, methylisobutylketone, heptanone, cyclohexanone, methylcyclohexanone, acetonylacetone and diisobutyl ketone, ether-based solvents, such as tetrahydrofuran, dioxane, diethyleneglycol dimethyl ether, anisole, methoxytoluene and dibutyl ether, or polar solvents, such as dimethylformamide, dimethylacetamide, N-methylpyrrolidone, ethylene glycol, diethylene glycol, diacetone alcohol and 1-methoxy-2-propanol. A mixture of two or more of these solvents may be used, too.

Subsequently, a substrate is coated with the prepared coating solution for the catalyst layer, followed by drying. Although a thickness of the coated film is not limited specifically, coating only has to be performed such that the thickness becomes within a range generally adopted as the catalyst layer of the polymer electrolyte fuel cell. For example, from not less than 1 µm to not larger than 100 µm is preferred. As the substrate, there is no specific limitation, there may be used a separator, a GDL, glass, a polymer film, such as of polyimide, polyethylene terephthalate, polyparabanic acid aramid, polyamide, polysulfone, polyethersulfone, polyethersulfone, polyphenylenesulfide, polyetheretherketone, polyetherimide, polyacrylate and polyethylene naphthalate, a heat-resistant fluorine resin, such as ethylene tetrafluoroethylene copolymer (ETFE), tetrafluoroethylene-hexafluoropropylene copolymer (FEP), tetrafluoro perfluoroalkylvinylether copolymer (PFA) and polytetrafluoroethylene (PTFE), too.

Although there is no specific limitation, an electrolyte layer only has to be an ion-exchange resin, and there may be used a film made of especially perfluoro-based sulfonic acid polymer, such as, by product names, Nafion (trade mark of Du Pont), Flemion (trade mark of Asahi Glass Co., LTD.), Aciplex (trade mark of Asahi Kasei Corporation) and the like. There may be also used hydrocarbon-based electrolyte, such as sulfonated PEEK (polyetheretherketone), PES (polyethersulfone) and PI (polyimide).

Although a thickness of the electrolyte layer is not limited specifically, coating only has to be performed such that the thickness becomes within a range generally adopted as the electrolyte layer of the polymer electrolyte fuel cell. For example, from not less than 10 µm to not larger than 500 µm is preferred.

In preparing a membrane electrode assembly, a pair of substrates on which the catalyst layers are formed are disposed to sandwich the electrolyte layer from its both sides such that each catalyst layer contacts the electrolyte layer, thereafter are stuck by hot pressing etc., followed by removing the substrates, thereby it can be prepared.

In preparing the polymer electrolyte fuel cell, both surfaces of the membrane electrode assembly are sandwiched with a pair of publicly known gas diffusion layers, followed by sandwiching further with a pair of publicly known separators, thereby it can be prepared. Examples

Hereinafter, the invention is described on the basis of examples. It will be noted that the scope of the invention is not limited to these embodiments.

### Example 1

### <TEMPO oxidation of cellulose>

30 g of soft wood bleached kraft pulp was suspended in 1800 g of distilled water, followed by adding a solution, in which 0.3 g of TEMPO and 3 g of sodium bromide were dissolved in 200 g of distilled water, and by cooling to 20 °C. 172 g of an aqueous solution of sodium hypochlorite having a concentration of 2 mol/l and a density of 1.15 g/ml was added drop by drop to commence the oxidation reaction. The system was invariably kept at a temperature of 20 °C and was continuously maintained at pH 10 against the lowering of pH during the reaction by addition of an aqueous solution of sodium hydroxide having a concentration of 0.5 mol/l. When sodium hydroxide reached 2.85 mmol/g relative to the weight of cellulose, enough ethanol was added so as to stop the reaction. Subsequently, hydrochloric acid was added until the pH reached 1, followed by washing well with distilled water repeatedly to obtain oxidized cellulose.

### Measurement of carboxyl groups in the oxidized cellulose

0.1 g, on solid weight basis, of the oxidized cellulose obtained by the above TEMPO oxidization was taken and dispersed in water at a concentration of 1%, followed by adding hydrochloric acid to make a pH of 3. Thereafter, the amount of the carboxyl groups (mmol/g) was measured by a conductometric titration method by use of 0.5 mol/l of sodium hydroxide aqueous solution. The results were found to be at 1.6 mmol/g.

### < Mechanical Fibrillation of oxidized cellulose >

1 g of the oxidized pulp obtained by the above-described TEMPO oxidation was dispersed in 99 g of distilled water, followed by adjustment of pH to 10 by using a sodium hydroxide aqueous solution. The prepared dispersion was subjected to treatment for reducing size by means of a juicer-mixer for 60 minutes to obtain a 1 wt% aqueous dispersion of oxidized fine cellulose.

The shape of the above oxidized fine cellulose was observed through atomic force microscopy (AFM). Ten fiber heights were measured and averaged to provide a number average fiber width. As to the fiber length, similar observation with tapping AFM was made to measure ten fiber lengths along its major length and an average thereof was taken as a number average fiber length. The number average fiber width was at 3.5 nm and the number average fiber length was at 1.3 µm.

### <Preparing a carbon fiber composite>

The above aqueous dispersion of oxidized fine cellulose and 5 mmol/l of chloroplatinic acid aqueous solution were mixed, and stirred sufficiently. Thereafter, 10 mmol/l of sodium borohydride was added to reduce chloroplatinic acid, thereby making oxidized fine cellulose to support platinum fine particles thereon to prepare an oxidized fine cellulose-platinum fine particle composite aqueous dispersion.

For measuring size of the above platinum fine particles, when observation was performed through a transmission electron microscope (TEM), the particle size was at 2 nm.

Next, the oxidized fine cellulose-platinum fine particle composite aqueous dispersion was freeze-dried, thereafter the obtained oxidized fine cellulose-platinum fine particle composite was heated at 1000 °C, thereby carbonizing it to prepare the carbon fiber composite.

### <Preparing a polymer electrolyte fuel cell>

The obtained carbon fiber composite and Nafion were dispersed such that the mass ratio became 2:1. A mixed solvent of methanol and ethanol with 1:1 was used as the solvent. A PTFE sheet was coated with the obtained solution such that platinum support amount was 0.3 mg/cm², and dried.

The above assemblies where the catalyst layers were formed on the PTFE sheets were disposed to face a Nafion film having a thickness of 25 µm, and were hot-pressed by sandwiching under a condition of 130 °C and 6 MPa. The PTFE sheets on both sides were removed, thereafter both side surfaces were sandwiched with carbon cloths and separators, thereby a polymer electrolyte fuel cell of Example 1 was prepared.

### Example 2

A polymer electrolyte fuel cell of Example 2 was prepared in the same way as Example 1, except, in the TEMPO oxidation of the above Example 1, the additive amount of sodium hydroxide was 1.5 mmol/g, and the amount of carboxyl groups of the obtained oxidized cellulose was 1.3 mmol/g.

### Example 3

A polymer electrolyte fuel cell of Example 3 was prepared in the same way as Example 1, except, in the TEMPO oxidation of the above Example 1, the additive amount of sodium hydroxide was 4.0 mmol/g, and the amount of carboxyl groups of the obtained oxidized cellulose was 1.9 mmol/g.

### Example 4

A polymer electrolyte fuel cell of Example 4 was prepared in the same way as Example 1, except, in the preparation of the carbon fiber composite of the above Example 1, the concentration of chloroplatinic acid aqueous solution was 2.5 mmol/l, and the size of the supported platinum fine particle was 1 nm.

### Example 5

A polymer electrolyte fuel cell of Example 5 was prepared in the same way as Example 1, except, in the preparation of the carbon fiber composite of the above Example 1, the concentration of chloroplatinic acid aqueous solution was 10 mmol/l, and the size of the supported platinum fine particle was 4 nm.

### Example 6

A polymer electrolyte fuel cell of Example 6 was prepared in the same way as Example 1, except, in the preparation of the carbon fiber composite of the above Example 1, the carbonization temperature of the oxidized fine cellulose-platinum fine particle composite was at 800 °C.

### [Comparative example 1]

Carbon supported platinum of 50 mass % in platinum support amount and Nafion were dispersed such that the mass ratio became 2:1 respectively. A mixed solvent of methanol and ethanol in 1:1 proportion was used as the solvent. A PTFE sheet was coated with the obtained solution such that platinum support amount was 0.3 mg/cm², and dried.

The above assemblies where the catalyst layers were formed on the PTFE sheets were disposed to face a Nafion film having a thickness of 25 µm, and were hot-pressed by sandwiching under a condition of 130 °C and 6 MPa. The PTFE sheets on both sides were removed, thereafter both side surfaces were sandwiched with cloths and separators, thereby a polymer electrolyte fuel cell of Comparative example 1 was prepared.

### [Comparative example 2]

A polymer electrolyte fuel cell of Comparative example 2 was prepared in the same way as Example 1, except, in the preparation of the carbon fiber composite of the above Example 1, the carbonization temperature of fine cellulose-platinum composite was at 250 °C (cellulose did not become carbon fibers, since the carbonization temperature was too low).

### Evaluation of cell performance

Regarding the polymer electrolyte fuel cells, the voltage at electrical current density of 0.3 A/cm² was compared.

**[Table 1]**

| | Cell voltage(V) |
|---|---|
| Example 1 | 1.05 |
| Example 2 | 0.89 |
| Example 3 | 1.11 |
| Example 4 | 1.14 |
| Example 5 | 0.88 |
| Example 6 | 0.83 |
| Example 7 | 1.19 |
| Comparative example 1 | 0.72 |
| Comparative example 2 | 0.21 |

As shown in the results of Table 1, carbon fibers were allowed to support platinum fine particles thereon in high density, and to serve the catalytic function efficiently with a small support amount.

## Claims

1. A method for producing a carbon fiber composite comprising the steps of: preparing a fine cellulose-metal fine particle composite by reducing a metal fine particle consisting of one or more types of metals or compounds thereof to deposit on fine cellulose having carboxyl groups on the crystalline surface thereof; and preparing a carbon fiber composite by carbonizing fine cellulose part of the fine cellulose-metal fine particle composite.

2. A carbon fiber composite, wherein metal fine particles consisting of one or more types of metals or compounds thereof are supported on at least a surface of carbon fibers,
wherein the fine cellulose has a number average fiber width of not less than 1 nm to not larger than 50 nm as determined by atomic force microscopy and a number average fiber length of not less than 100 to not larger than 10000 times the number average fiber width as determined by atomic force microscopy, and a particle size of the metal fine particle is from not less than 1 nm to not larger than 50 nm as determined by transmission electron microscopy, **characterized in that** the carbon fiber composite is obtainable by the method according to claim 1.

3. The carbon fiber composite defined in claim 2, wherein carboxyl groups are introduced on crystalline surfaces of the fine cellulose by oxidation reaction with an N-oxyl compound wherein an amount of the carboxyl groups of the fine cellulose is from not less than 0.1 mmol/g to not more than 3.0 mmol/g.

4. The carbon fiber composite defined in claim 1 or 2, wherein fine cellulose has crystallinity of 50 % or more, and has a crystal structure of cellulose type I.

5. A catalyst support **characterized by** using the carbon fiber composite defined in any one of claims 2 to 4.

6. A polymer electrolyte fuel cell **characterized by** using the catalyst support defined in claim 5.

## Patentansprüche

1. Verfahren zum Herstellen eines Kohlefaserkomposits, umfassend die Schritte: Zubereiten eines Feinzellulose-Metallfeinteilchen-Komposits durch Reduzieren eines Metallfeinteilchens, das aus einer oder mehreren Arten von Metallen oder Verbindungen davon besteht, um auf Feinzellulose mit Carboxylgruppen auf deren kristalliner Oberfläche abzuscheiden; und Zubereiten eines Kohlefaserkomposits durch Karbonisieren des Feinzelluloseteils in dem Feinzellulose-Metallfeinteilchen-Komposit.

2. Kohlefaserkomposit, wobei Metallfeinteilchen, die aus einer oder mehreren Arten von Metallen oder Verbindungen davon bestehen, auf zumindest einer Oberfläche von Kohlefasern geträgert sind,
wobei die Feinzellulose eine zahlenmittlere Faserbreite von nicht weniger als 1 nm und nicht größer als 50 nm und eine zahlenmittlere Faserlänge von nicht weniger als dem 100fachen und nicht größer als dem 10000fachen der zahlenmittleren Faserbreite aufweist, und
eine Teilchengröße des Metallfeinteilchens von nicht weniger als 1 nm bis nicht größer als 50 nm beträgt,
**dadurch gekennzeichnet, dass** das Kohlefaserkomposit durch das Verfahren nach Anspruch 1 erhältlich ist.

3. Kohlefaserkomposit nach Anspruch 2, wobei Carboxylgruppen auf kristallinen Oberflächen der Feinzellulose durch Oxidationsreaktion mit einer N-Oxylverbindung eingeführt sind, wobei eine Menge der Carboxylgruppen der Feinzellulose von nicht weniger als 0,1 mMol/g bis nicht mehr als 3,0 mMol/g beträgt.

4. Kohlefaserkomposit nach Anspruch 1 oder 2, wobei Feinzellulose eine Kristallinität von 50 % oder mehr aufweist und eine Kristallstruktur vom Zellulosetyp I aufweist.

5. Katalysatorträger, **gekennzeichnet durch** Verwendung des Kohlefaserkomposits nach einem der Ansprüche 2 bis 4.

6. Polymerelektrolytbrennstoffzelle, **gekennzeichnet durch** Verwendung des Katalysatorträgers nach Anspruch 5.

## Revendications

1. Procédé pour produire un composite de fibres de carbone, comprenant les étapes suivantes : préparation d'un composite de fines particules de métal-cellulose par réduction de fines particules métalliques consistant en un ou plusieurs types de métaux ou de composés de ceux-ci pour une déposition sur de la cellulose fine ayant des groupes carboxyle sur sa surface cristalline ; et préparation d'un composite de fibres de carbone par carbonisation de la partie en cellulose fine du composite de fines particules de métal-cellulose.

2. Composite de fibres de carbone, dans lequel de fines particules métalliques consistant en un ou plusieurs types de métaux ou de composés de ceux-ci sont supportées sur au moins une surface de fibres de carbone,
dans lequel la cellulose fine a une largeur de fibre moyenne en nombre d'au moins 1 nm à au plus 50 nm, telle que déterminée par microscopie à force atomique et une longueur de fibre moyenne en nombre d'au moins 100 à au plus 10 000 fois la largeur de fibre moyenne en nombre, telle que déterminée par microscopie à force atomique, et la granulométrie des fines particules de métal est d'au moins 1 nm à au plus 50 nm, telle que déterminée par microscopie électronique à transmission,
**caractérisé en ce que** le composite de fibres de carbone peut être obtenu par le procédé selon la revendication 1.

3. Composite de fibres de carbone selon la revendication 2, dans lequel des groupes carboxyle sont introduits sur les surfaces cristallines de la cellulose fine par une réaction d'oxydation avec un composé N-oxy, dans lequel la quantité des groupes carboxyle de la cellulose fine est d'au moins 0,1 mmol/g à au plus 3,0 mmol/g.

4. Composite de fibres de carbone selon la revendication 1 ou 2, dans lequel la cellulose fine a une cristallinité de 50 % ou plus, et a une structure cristalline de cellulose de type I.

5. Support de catalyseur **caractérisé par** l'utilisation du composite de fibres de carbone défini dans l'une quelconque des revendications 2 à 4.

6. Pile à combustible à électrolyte polymère **caractérisé par** l'utilisation du support de catalyseur défini dans la revendication 5.
